# EUROPEAN PATENT SPECIFICATION

(11) **EP 3 218 187 B1**
(45) Date of publication and mention of the grant of the patent: **11.01.2023**
(21) Application number: 14906006.3
(22) Date of filing: 12.11.2014
(51) Int. Cl.: B32B 15/08, B32B 15/12, B32B 27/08, B32B 27/32

(54) **CHEMICALLY-RESISTANT BARRIER FILM**
CHEMISCH RESISTENTE BARRIEREFOLIE
FILM BARRIÈRE RÉSISTANT AUX PRODUITS CHIMIQUES

(43) Date of publication of application: 20.09.2017
(73) Proprietor: Amcor Flexibles North America, Inc., Neenah, WI 54956 (US)
(72) Inventor: MCMILLAN, Lyndsey, A., Neenah, WI 54956 (US); BERBERT, Miriam, B., Oshkosh, WI 54904 (US)
(74) Representative: Vossius & Partner Patentanwälte Rechtsanwälte mbB
(86) International application number: PCT/US2014/065133
(87) International publication number: WO 2016/076844

(56) References cited:
- EP-A1- 1 769 908
- WO-A1-2010/100490
- WO-A1-2013/086950
- JP-A- H09 104 464
- US-A- 6 111 019
- US-A1- 2006 046 006
- US-A1- 2007 047 853
- US-A1- 2007 141 366
- US-A1- 2008 050 651

## Description

### BACKGROUND OF THE INVENTION

The present invention relates generally to primary packaging and more particularly, to multilayer high moisture barrier laminates for use as a chemically-resistant barrier film.

The food, beverage, and pharmaceutical industries have high demand for packages with characteristic high barrier to gases, water vapor and flavors, while maintaining durability. For this reason, flexible multilayer polymeric film is commonly used in a variety of packages and decorative applications. Regardless of the type of product stored in the package, it is necessary that the package be capable of containing the product without the film degrading due to the type of product. In some instances where metallic foil or metallized film is used as a barrier against air and moisture, it can be difficult to maintain the packaging film's integrity when solvents, halogens or strong acids and bases are present in the product. For example, commonly used topical antiseptic products contain isopropyl or ethyl alcohol, povidone iodine, poloxamer iodine, benzalkonium chloride, benzethonium chloride, or chlorhexidine gluconate as a single agent or in combination with alcohol. Food condiments such as mustard, ketchup, and horseradish typically include acetic, citric and/or formic acid as an ingredient. Those skilled in the art recognize that halogens, acids and bases can slowly destroy the barrier properties of a film by attacking the metal layer directly or by affecting the adhesion of the metal layer to other film layers. As a result, there is a need to develop packaging materials having a layer of metallic foil or metallized film which provides high oxygen and/or moisture barrier properties and which can withstand the corrosive effects of products containing solvents, halogens or acids and bases.

Those skilled in the art will recognize that conventional film laminates commonly used in the healthcare packaging industry require multiple layers of biaxially oriented polyethylene terephthalate (OPET) which act as a chemical barrier to aggressive solvents and other chemicals. The metal foil layer and its adjacent layers of such laminates need to be protected against the ingress of these aggressive chemicals which could minimize or destroy the adhesion between these layers and ultimately affect the barrier properties of the laminate. Consequently, the method of making these conventional laminates is complex and costly because the foil layer and each of the OPET layers require a separate lamination operation in order to fabricate the final laminate structure. Therefore, it would be highly desirable to provide high oxygen and/or high moisture barrier film laminates which can withstand the aggressive chemical effects of solvents, halogens or acids and bases without the need for multiple layers of biaxially oriented polyethylene terephthalate (OPET).

EP 1 769 908 A1 discloses an easy tear flexible packaging system based on the combination of several film layers, where one or more layers is fabricated using special resin blends and/or particular extrusion/stretching conditions in order to obtain that said special layer(s) facilitate the tearing of the whole complex and guides the tearing behaviour of the other layers, when said complex is converted into a consumer package.

### SUMMARY OF THE INVENTION

The present invention is directed to flexible chemically-resistant barrier laminates for packaging a product. The product may be a foodstuff, a personal health care product, a pharmaceutical product, an industrial product or an agricultural product. The laminate includes a first exterior layer comprising a thermoplastic film or paper, a second exterior layer comprising a heat sealable material, a first interior layer comprising metallic foil or metallized polymer material, and a second interior layer positioned between the first interior layer and the second exterior layer; wherein the second interior layer comprises a cyclic olefin copolymer. An important aspect of the present invention is relative positioning of the cyclic olefin copolymer layer with respect to other film layers of the laminate. The inventors have discovered that the layer of cyclic olefin copolymer can act as a chemical barrier to some substances that may migrate from the product through the film to the metallic foil or metallized film layer and cause undesirable degradation of the barrier properties of the metallic foil or metallized film and/or undesirable delamination to adjacent layers. This in turn means that the cyclic olefin copolymer layer must be positioned between the sealant layer which is exposed to the product and the layer of metallic foil or metallized film. The cyclic olefin copolymer (COC) may be any copolymer having at least one norbornene structural moiety within the repeating backbone of the polymer. Typical cyclic olefin copolymers include both norbornene and olefin structural moieties. Preferably, the COC is a copolymer of ethylene and 2-norbornene. Suitable COCs for use in the present invention may have a heat deflection temperature under load (0.45 MPa) of about 75° C, or 130° C, or 150° C, or 170° C. Exemplary of commercially available cyclic olefin copolymers include, but are not limited to, the TOPAS^{®} family of resins which is supplied by TOPAS Advanced Polymers, Inc. (Florence, KY, USA).

Another important aspect of the present invention is that the laminates have sufficient flexibility to permit the fabrication of flexible pouches, bags and the like on conventional packaging equipment such as for example, but not limited to vertical form-fill-seal or horizontal form-fill-seal manufacturing equipment. A precondition for such flexibility is that the laminates should exhibit a bending resistance (or stiffness) of between 51.4 and 177 Gurley Units (0.50 and 1.74 mNewton) in either the machine and/or transverse direction. Industry standards for measuring the bending resistance (or stiffness) adopted by the Technical Association of the Pulp and Paper Industry (TAPPI) can be used to characterize the bending resistance of the laminates of the present invention. Bending resistance can be measured in accordance with T 543 TAPPI test method. For example, the Gurley Stiffness value can be measured via a Gurley Stiffness Tester, manufactured by Gurley Precision Instruments of Troy, N.Y. The Gurley Stiffness Tester measures the externally applied moment required to produce a given deflection of a strip of material of specific dimensions fixed at one end and having a concentrated load applied to the other end. The results are obtained as "Gurley Stiffness Units", which can be readily converted into force units, mNewton (mN) by multiplying the "Gurley Stiffness Units" by 9.807 × 10⁻³.

Still another important aspect of the present invention is that the laminates provide a barrier to the outside environment for products packaged within these laminates. The term "barrier" refers to laminates having an oxygen gas transmission rate of between 0 to 10.0 cm³/100 in²/24 hours (0 to 155 cm³/m²124 hours) at 73° F (23° C) and 0% relative humidity and/or a water vapor transmission rate of between 0 to 0.1 g/100 in²/24 hours (0 to 1.55 g/m²/24 hours) at 100° F (38° C) and 90% relative humidity.

### BRIEF DESCRIPTION OF THE DRAWINGS

Further features and advantages of the present invention will become apparent from the following detailed description, taken in combination with the appended drawings, in which:
FIG. 1 illustrates a schematic view of a laminate not according to the present invention.
FIG. 2 illustrates a schematic view of an embodiment of a laminate according to the present invention.
FIG. 3 illustrates a schematic view of another embodiment of a laminate according to the present invention.
FIG. 4 illustrates a schematic view of still another embodiment of a laminate according to the present invention.

### DETAILED DESCRIPTION OF THE INVENTION

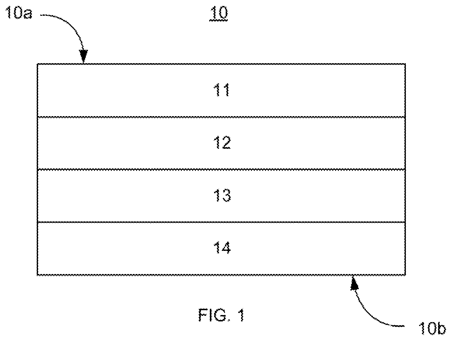

Referring now more particularly to FIG. 1 of the drawings, a laminate **10** is shown having at least four layers. The laminate **10** has a first exterior surface **10a** and a second exterior surface **10b,** and comprises a first layer **11** comprising a heat sealable material, a second layer **12** comprising a cyclic olefin copolymer, a third layer **13** comprising metallic foil or metallized polymer material, and a fourth layer **14** comprising a thermoplastic film or paper. As can be seen, the first layer **11** forms the first exterior surface **10a** and the fourth layer **14** forms the second exterior surface **10b** of laminate **10.** Second layer **12** is positioned between first layer **11** and third layer **13.** In this embodiment, laminate **10** may include more layers than depicted and may include any number of film layers and film layer compositions depending upon both functional and aesthetic requirements of the laminate. For example, the thermoplastic film of fourth layer **14** may itself be a multilayer film having 2, 3, 4, 5, 6, 7 or more layers. Alternatively, the first layer **11** may include a multilayer film with the proviso that there is a second layer **12** containing a cyclic olefin copolymer disposed between it and the metallic foil or metallized polymer film of third layer **13.**

First layer **11** comprising a heat sealable material may be any thermoplastic material which forms a fusion or peelable fusion seal to itself or a similar material under pressure and heat. Such material may include, but is not limited to, homopolymers and copolymers of polyethylene such as low density polyethylene (LDPE), linear low density polyethylene (LLDPE), very low density polyethylene (VLDPE), ultra-low density polyethylene (ULDPE), ionomers and blends thereof. First layer **11** may also include copolymers of ethylene with one or more comonomers selected from C₃ to C₁₀ alpha-olefins such as propene, butene-1, hexene-1, octene-1, etc. in which the molecules of the copolymers comprise long polymer chains with relatively few side chain branches arising from the alphaolefin which was reacted with ethylene. Heat sealable materials may also include ethylene vinyl acetate copolymers, ethylene acrylic acid copolymers, ethylene methacrylic acid, ethylene methacrylate copolymers and blends thereof. Heat sealable materials may even further include certain grades of cyclic olefin copolymers. In one preferred embodiment, first layer **11** has a total thickness of at least 25.4 µm (1 mil). In another preferred embodiment, first layer **11** has a total thickness of about 50.8 µm (2 mil).

The second layer **12** comprises a cyclic olefin copolymer. Ethylene/norbornene copolymers are known commercially as cyclic olefin copolymers, "COC," with one or more different cyclic olefin units randomly or alternately attached to the ethylene polymer backbone. In general, COCs exhibit a high glass transition temperature (greater than 50° C), optical clarity, low heat shrinkage, low moisture absorption and low birefringence. These materials have been produced by a number of polymerization techniques which include chain polymerization of cyclic monomers such as 8, 9, 10-trinorborn-2-ene (norbornene) of 1, 2, 3, 4, 4a, 5, 8, 8a-octa-hydro-1, 4:5, 8-dimethanonaphthalene (tetracyclododecene) with ethane; or ring-opening metathesis of various cyclic monomers followed by hydrogenation. It is also contemplated that second layer **12** may comprise a blend of COC and another thermoplastic material such as, but not limited to homopolymers and copolymers of polyethylene.

Third layer **13** may comprise any metallic foil such as, but not limited to, aluminum, tin, copper and the like. These materials are well known in the art. Alternatively, third layer **13** may include a metallized polymer layer. Any conventional metallization technique known to those skilled in the art can be used to form a metallized polymer layer. An especially preferred metallization technique is vacuum deposition wherein the metal is vacuum evaporated and then deposited onto the polymer layer. (See, William Goldie in Metallic Coating of Plastics, Vol. 1, Electrochemical Publications Limited, Chap. 12 (1968), the disclosure of which is incorporated herein by reference in its entirety.) A metal may be preferably deposited onto a polymer layer by vapor deposition techniques, typically by applying the molten metal under vacuum by such techniques as electron beam evaporation, sputtering, induction heating, or thermal evaporation. A particularly specific technique for metallization is by electron beam vacuum evaporation deposition methods. Preferred values for the average thickness of the metal are within the range of about 1.0 to 100 nanometers, with the preferred average thickness being within the range of about 3 to 25 nanometers. (1 micron equals 10⁻⁷ meters, and 1 nanometer equals 10⁻⁸ meters.) Regardless, the metal coating preferably has a thickness less than the polymer substrate on which it is deposited, preferably substantially less than said substrate. It is contemplated that the metallized polymer layer can also include a metal oxide such as but not limited to aluminum oxide.

The thermoplastic film of fourth layer **14** may include, but is not limited to, aromatic polyesters such as, but not limited to, polyethylene terephthalate (PET), oriented polyethylene terephthalate (OPET), amorphous polyethylene terephthalate (APET), glycol-modified polyethylene terephthalate (PETG), aliphatic polyesters such as, but not limited to, polylactic acid (PLA); polyhydroxyalkonates including but not limited to polyhydroxypropionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvalerate) (PH5V), poly(6-hydroxydodecanoate) (PH6D); or polyamides such as, but not limited to, oriented and unoriented nylon 6, nylon 66, nylon 6/66 and blends thereof, polystyrenes such as, but not limited to, high impact polystyrene (HIPS), general purpose polystyrene (GPPS), and styrene block copolymer (SBC), HIPS is sometimes called rubber-modified polystyrene and is normally produced by copolymerization of styrene and a synthetic rubber. (See Wagner, et al., "Polystyrene," The Wiley Encyclopedia of Packaging Technology, Second Edition, 1997, pp. 768-771 (John Wiley & Sons, Inc., New York, New York), which is incorporated in its entirety in this application by this reference.) Examples of HIPS include but are not limited to Impact Polystyrene 825E and Impact Polystyrene 945E, both of which are available from Total Petrochemicals USA, Inc.; EB6025 Rubber Modified High Impact Polystyrene, which is available from Chevron Phillips Company (The Woodlands, Texas); and 6210 High Impact Polystyrene, which is available from Ineos Nova LLC (Channahon, Illinois). Alternatively, the thermoplastic film may comprise a polyolefin such as polyethylene including, but not limited to, high density polyethylene (HOPE), medium density polyethylene (MDPE), low density polyethylene (LDPE), linear low density polyethylene (LLDPE), very low density polyethylene (VLDPE), ultra-low density polyethylene (ULDPE) and blends thereof, or polypropylene and blends thereof. A non-limiting example of high density polyethylene includes Alathon^{®} M6020 from Equistar Chemicals LP (Houston, Tex.). Other specific non-limiting examples of HOPE include Alathon^{®} M6020 available from Equistar Chemicals LP (Houston, Tex.); Alathon^{®} L5885 available from Equistar Chemicals LP (Houston, Tex.); ExxonMobil^{™} HDPE HD 7925.30 available from ExxonMobil Chemical Company (Houston, Tex.); and ExxonMobil^{™} HDPE HD 7845.30 available from ExxonMobil Chemical Company (Houston, Tex.). In one preferred embodiment, the thermoplastic film is uniaxially oriented. In another preferred embodiment, the thermoplastic film is biaxially oriented.

In contrast to a thermoplastic film, fourth layer **14** may alternatively comprise paper. Those skilled in the art can differentiate paper from paperboard based on a variety of different characteristics. For example, generally paper is composed of a single layer and has an area weight of less than 224 g/m², preferably less than 224 g/m², more preferably, less than 100 g/m², and most preferably, less than 50 g/m². In contrast to paper, paperboard usually consists of two or three layers and has an area weight of 224 g/m² or more. Typically, most papers have a thickness of between 2.54 and 254 µm (0.1 and 10 mil), while paperboard is generally thicker than paper having a thickness of at least 305 µm (12 mil). Suitable papers for use in the present invention include, but are not limited to Kraft paper, medical grade paper, bleached paper, vegetable parchment, water, grease and oil-resistant paper, waxed paper, specialty-treated paper, wet-strength paper, absorbent paper, tissue paper and coated paper. (See Brody, et al., "Paper" and "Paperboard", The Wiley Encyclopedia of Packaging Technology, Second Edition, 1997, pp. 714-723 (John Wiley & Sons, Inc., New York, New York), which is incorporated in its entirety in this application by this reference.) Specific non-limiting examples of commercially available papers for use in the present invention include Duncote II HG high gloss calendared family of paper manufactured by Dunn Corporation (Port Huron, MI).

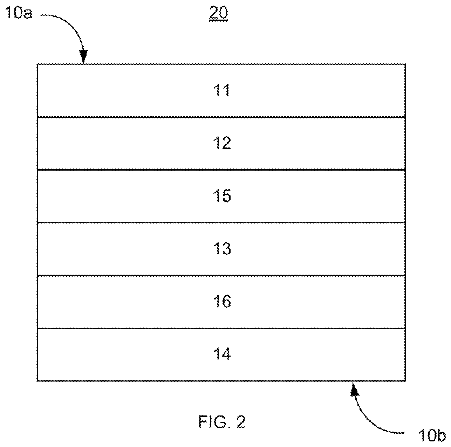

Referring now to FIG. 2, there is shown an embodiment of a six-layer laminate **20** according to the invention which has the same layer compositions described above for laminate **10** and illustrated in FIG. 1, wherein the second layer (12) is 100 wt.% of a cyclic olefin copolymer and further includes a fifth layer **15** a sixth layer **16.** Layers **15** and **16** are positioned on either side of the third layer **13** and adheres the foil or metallized polymer layer within the laminate structure. Accordingly, each of layers **15** and **16** comprise at least one of an ethylene acrylic acid copolymer and a polyurethane adhesive.

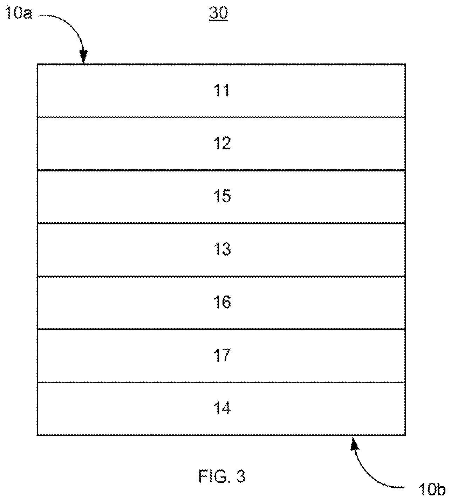

As shown in FIG. 3, there is illustrated a seven-layer preferred embodiment of a laminate **30** of the present invention. Laminate **30** includes the same layer compositions described above for laminate **20** and illustrated in FIG. 2, but further includes a seventh layer **17.** As depicted, seventh layer **17** is disposed between fourth layer **14** and sixth layer **16.** Layer **17** may include a polyethylene such as, but not limited to as low density polyethylene (LDPE), linear low density polyethylene (LLDPE), very low density polyethylene (VLDPE), ultra-low density polyethylene (ULDPE) and blends thereof.

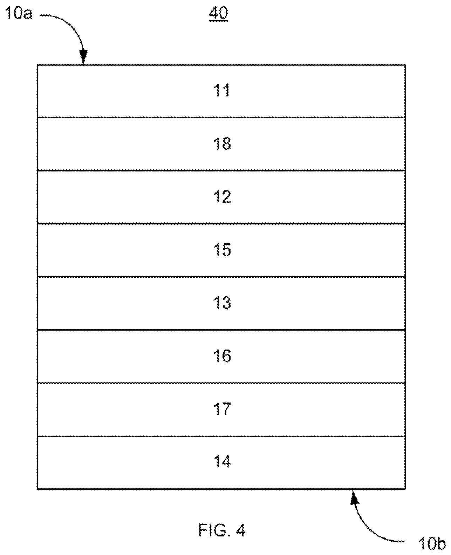

Alternatively, the laminate of the present invention may include an eight-layer structure **40** as illustrated in FIG. 4. This embodiment includes the same layer sequence having the same layer compositions as described above for laminate **30**, but further includes an eighth layer **18** positioned between the sixth layer **16** and fourth layer **14.** Layer **18** may comprise a homopolymer or copolymer of polyethylene, an ethylene acrylic acid copolymer or blends thereof.

In the laminate of the present invention, the paper preferably has a paper weight of between 1 and 224 g/m², more preferably between 1 and 160 g/m², even more preferably between 1 and 100 g/ m² and most preferably between 1 and 50 g/m².

In the laminate of the invention, the heat sealable material preferably comprises a polyolefin, the polyolefin preferably comprises a polyethylene, and the polyethylene preferably comprises a linear low density polyethylene. Further, it is prefered that the first layer has a total thickness of about 50.8 µm (2 mil). It is also preferred that the cyclic olefin copolymer is an ethylene 2-norbornene copolymer.

### WORKING EXAMPLE

In the following example, laminate structure **30** was produced using tandem extrusion lamination apparatuses, and methods which are well known to those skilled in the art. Prior to lamination, a unitary film composed of layers **11** and **12** was fabricated by blown film co-extrusion film apparatus and methods which are also well known in the art. The unitary film and the remaining layers were fabricated into a laminate using a tandem laminator.

### Example 1

Example 1 is one embodiment of laminate **30** of the present invention having a layer sequence (in the order as shown below) and layer compositions as described below and as illustrated in FIG. 3. Reported below is the layer composition relative to the total weight of the layer.

| | |
|---|---|
| Layer 11 (Sealant): | 82.3 wt.-% of a linear low density polyethylene (LLDPE)-DOWLEX^{™} 2045G (The Dow Chemical Company, Midland, MI, USA), 15 wt.-% of a low density polyethylene (LDPE)- Petrothene^{®} NA952000 (Equistar Chemicals, LP, Houston, TX, USA) and 2.7 wt.-% of a polyethylene masterbatch comprising processing additives. |
| Layer 12: | 100 wt.-% of a cyclic olefin copolymer (COC)-TOPAS^{®} 8007F-400 (TOPAS Advanced Polymers, Inc., Florence, KY, USA). |
| Layer 15: | 100 wt.-% of a polyurethane adhesive-Liofol^{®} 3649/ Liofol^{®} 6255 (Liofol Company, Cary, NC, USA). |
| Layer 13: | 100 wt.-% of a 35 gauge aluminum foil-(Jiangsu Zhongji Lamination Materials Co., Ltd., Jiangyin City, Jiangsu Province, P.R.C.). |
| Layer 16: | 100 wt.-% of an ethylene acrylic acid copolymer (EAA)-Primacor^{®} 3440 (The Dow Chemical Company, Midland, MI, USA). |
| Layer 17: | 100 wt.-% of a low density polyethylene (LDPE)-Petrothene^{®} NA216000 (Equistar Chemicals, LP, Houston, TX, USA). |
| Layer 14: | 100 wt.-% of a 48 gauge biaxially oriented polyethylene terephthalate (OPET)-Skyrol^{®} SP65 (SKC, Inc., Covington, GA, USA). |

In the following example, laminate structure **40** illustrated in FIG. 4 was produced using tandem extrusion lamination apparatuses, and methods which are well known to those skilled in the art. Prior to lamination, a unitary film composed of layer **11** was fabricated by blown film co-extrusion film apparatus and methods which are also well known in the art. The unitary film and the remaining layers were fabricated into a laminate by a tandem laminator.

### Example 2

Example 2 is one embodiment of laminate **40** of the present invention which was produced using tandem extrusion lamination apparatuses, and methods which are well known to those skilled in the art. Prior to lamination, a unitary film composed of layer **11** was fabricated by blown film co-extrusion film apparatus and methods which are also well known in the art. The unitary film and the remaining layers were fabricated into a laminate using a tandem laminator.

| | |
|---|---|
| Layer 11 (Sealant): | 82.3 wt.-% of a linear low density polyethylene (LLDPE)-DOWLEX^{™} 2045G (The Dow Chemical Company, Midland, MI, USA), 15 wt.-% of a low density polyethylene (LDPE)- Petrothene^{®} NA952000 (Equistar Chemicals, LP, Houston, TX, USA) and 2.7 wt.-% of a polyethylene masterbatch comprising processing additives. |
| Layer 18: | 100 wt.-% of a low density polyethylene (LDPE)-DOW^{™} LDPE 4012 (The Dow Chemical Company, Midland, MI, USA). |
| Layer 12: | 100 wt.-% of a cyclic olefin copolymer (COC)-TOPAS^{®} 8007F-400 (TOPAS Advanced Polymers, Inc., Florence, KY, USA). |
| Layer 15: | 100 wt.-% of an ethylene acrylic acid copolymer (EAA)-Primacor^{®} 3440 (The Dow Chemical Company, Midland, MI, USA). |
| Layer 13: | 100 wt-% of a 35 gauge aluminum foil-(Jiangsu Zhongji Lamination Materials Co., Ltd., Jiangyin City, Jiangsu Province, P.R.C.). |
| Layer 16: | 100 wt.-% of an ethylene acrylic acid copolymer (EAA)-Primacor^{®} 3440 (The Dow Chemical Company, Midland, MI, USA). |
| Layer 17: | 100 wt-% of a low density polyethylene (LDPE)-Petrothene^{®} NA216000 (Equistar Chemicals, LP, Houston, TX, USA). |
| Layer 14: | 100 wt.-% of a 48 gauge biaxially oriented polyethylene terephthalate (OPET)-Skyrol^{®} SP65 (SKC, Inc., Covington, GA, USA). |

In the following comparative example, a laminate was produced using tandem extrusion lamination apparatuses, and methods which are well known to those skilled in the art. Prior to lamination, a primary unitary film composed of layer **11** was fabricated by blown film co-extrusion film apparatus and methods which are also well known in the art. Then this primary unitary film was laminated together with layers **18** and **12** to form a three-layer secondary unitary film. Subsequently, this secondary unitary film and the remaining layers were fabricated into a laminate using a tandem laminator.

### Comparative Example 1

Comparative Example 1 is a laminate having the layer sequence (in the order as shown below) as illustrated in FIG. 4, but with different layer compositions as described above for laminate **40.** Those skilled in the art will recognize that Comparative Example 1 is a conventional film laminate commonly used in the health and food packaging industry. Reported below is the layer composition relative to the total weight of the layer.

| | |
|---|---|
| Layer 11 (Sealant): | 100 wt.-% of a linear low density polyethylene (LLDPE)-DOWLEX^{™} 2045G (The Dow Chemical Company, Midland, MI, USA). |
| Layer 18: | 100 wt.-% of a polyurethane adhesive-Liofol^{®} 3649/ Liofol^{®} 6255 (Liofol Company, Cary, NC, USA). |
| Layer 12: | 100 wt.-% of a 36-48 gauge biaxially oriented polyethylene terephthalate (OPET)-Skyrol^{®} SP65 (SKC, Inc., Covington, GA, USA). |
| Layer 15: | 100 wt.-% of a polyurethane adhesive-Liofol^{®} 3649/ Liofol^{®} 6255 (Liofol Company, Cary, NC, USA). |
| Layer 13: | 100 wt.-% of a 35 gauge aluminum foil-(Jiangsu Zhongji Lamination Materials Co., Ltd., Jiangyin City, Jiangsu Province, P.R.C.). |
| Layer 16: | 1 00 wt.-% of an ethylene acrylic acid copolymer (EAA)-Primacor^{®} 3440 (The Dow Chemical Company, Midland, MI, USA). |
| Layer 17: | 100 wt.-% of a low density polyethylene (LDPE)-DOW^{™} LDPE 4012 (The Dow Chemical Company, Midland, MI, USA). |
| Layer 14: | 100 wt-% of a 48 gauge biaxially oriented polyethylene terephthalate (OPET)-Skyrol^{®} SP65 (SKC, Inc., Covington, GA, USA). |

The bending resistance of Example 2 was measured on a Gurley-type tester. This measurement substantially followed the test procedure in accordance with TAPPI Test Method T 543 "Bending Resistance of Paper (Gurley-Type Tester)". The results are reported below in TABLE 1.

| TABLE 1-Gurley Stiffness | | |
|---|---|---|
| | Example 2 | |
| Gurley Stiffness (Gurley units) | MD | TD |
| Average | 57.2 | 64.8 |
| Std. Dev. | 4.21 | 2.66 |
| Max | 73.7 | 72.3 |
| Min | 51.4 | 61.2 |
| n= | 24 | 25 |

The chemical resistance of Example 2 and Comparative Example 1 to various liquid substances was determined by folding a film specimen in half to form a 3 inch × 3 inch area pouch having two 0.375 in. side heat seals. Into each pouch there was placed a 10 mL aliquot of a liquid substance, the pouch was sealed with a third 0.375 in. side heat seal and then was laid flat for a number of days under accelerated aging conditions in an aging chamber (50° C and 10% relative humidity). After 1, 5, 12, 22 and 32 days in the aging chamber, the pouch was opened, the liquid removed and the pouch was dried. A positive test result was indicated ("+") when no discernable delamination of the foil layer to its adjacent layers or corrosion of the foil was observed. A negative test result was indicated ("-") when delamination between the foil layer and its adjacent layers and/or corrosion of the foil was observed. The results for Example 2 and Comparative Example 1 are reported below in TABLES 2 and 3, respectively.

| TABLE 2-Example 1 Chemical Resistance | | | | | |
|---|---|---|---|---|---|
| | Day 1 | Day 5 | Day 12 | Day 22 | Day 32 |
| Iodine | + | + | + | + | + |
| Bleach | + | + | + | + | + |
| Tabasco | + | + | + | + | + |
| Ketchup | + | + | + | + | + |
| Propylene Glycol | + | + | + | + | + |
| Ammonia | + | + | + | + | + |
| Acetic Acid | + | + | + | + | + |
| Isopropanol | + | + | + | + | + |
| Water | + | + | + | + | + |

| TABLE 3-Comparative Example 1 Chemical Resistance | | | | | |
|---|---|---|---|---|---|
| | Day 1 | Day 5 | Day 12 | Day 22 | Day 32 |
| Iodine | + | + | + | + | + |
| Bleach | + | + | + | + | + |
| Tabasco | + | + | + | - | - |
| Ketchup | + | + | + | + | - |
| Propylene Glycol | + | + | + | + | + |
| Ammonia | + | + | + | - | - |
| Acetic Acid | + | + | + | - | - |
| Isopropanol | + | + | + | + | + |
| Water | + | + | + | + | + |

These accelerated aging test results indicate that the laminates of the present invention having a single layer of cyclic olefin copolymer (COC) between the sealant layer and the metal foil layer performed as well as or better than a conventional laminate structure having multiple layers of biaxially oriented polyethylene terephthalate (OPET).

The above description and examples illustrate certain embodiments of the present invention and are not to be interpreted as limiting.

## Claims

1. A flexible chemically-resistant barrier laminate (10) for packaging a product, the laminate having a first exterior surface and a second exterior surface, the laminate comprising:
a first layer (11) comprising a heat sealable material; wherein the first layer (11) forms the first exterior surface (10a) of the laminate (10);
a second layer (12) being 100 wt.% of a cyclic olefin copolymer;
a third layer (13) comprising metallic foil or metallized polymer material; wherein the second layer (12) is positioned between the first (11) and third (13) layers;
a fourth layer (14) comprising a thermoplastic film or paper; wherein the fourth layer (14) forms the second exterior surface (10b) of the laminate (10);
a fifth layer (15) and a sixth layer (16); wherein both the fifth (15) and sixth (16) layers comprise at least one of an ethylene acrylic acid copolymer and a polyurethane adhesive;
wherein the third layer (13) is in direct contact with both the fifth (15) and sixth (16) layers; and
wherein the laminate (10) has a bending resistance of between 51.4 and 177 Gurley Units (0.50 and 1.74 mNewton) in either the machine or transverse direction, measured according to the description.

2. A laminate (10) according to claim 1, wherein the paper has a thickness of between 25.4 and 305 µm (1 and 12 mil).

3. A laminate (10) according to claim 1, wherein the paper has a basis weight of between 1 and 50 g/m².

4. A laminate (10) according to claim 1, wherein the thermoplastic film comprises a material selected from the group consisting of polyethylene terephthalate (PET), polypropylene (PP), polyamide (PA), high impact polystyrene (HIPS), general purpose polystyrene (GPPS), styrene block copolymer (SBC), high density polyethylene (HDPE), medium density polyethylene (MDPE), low density polyethylene (LDPE), linear low density polyethylene (LLDPE), very low density polyethylene (VLDPE), ultra-low density polyethylene (ULDPE) and blends thereof.

5. A laminate (10) according to claim 4, wherein the thermoplastic film is oriented.

6. A laminate (10) according to claim 1, wherein the laminate (10) comprises a seventh layer (17) disposed between the fourth layer (14) and the sixth layer (16), and wherein the seventh layer (17) comprises a low density polyethylene.

7. A laminate (10) according to claim 6, wherein the laminate (10) comprises an eighth layer (18) disposed between the first layer (11) and the second layer (12), and wherein the eighth layer (18) comprises a low density polyethylene or a polyurethane adhesive.

8. A laminate (10) according to claim 1, wherein the first layer (11) has a total thickness of at least 25.4 µm (1 mil).

## Patentansprüche

1. Flexibles chemisch resistentes Barrierelaminat (10) zum Verpacken eines Produkts, wobei das Laminat eine erste Außenoberfläche und eine zweite Außenoberfläche aufweist, wobei das Laminat umfasst:
eine erste Schicht (11), die ein heißsiegelbares Material umfasst; wobei die erste Schicht (11) die erste Außenoberfläche (10a) des Laminats (10) bildet;
eine zweite Schicht (12), die 100 Gew.% eines cyclischen Olefincopolymers ist;
eine dritte Schicht (13), die Metallfolie oder metallisiertes Polymermaterial umfasst; wobei die zweite Schicht (12) zwischen der ersten (11) und der dritten (13) Schicht positioniert ist;
eine vierte Schicht (14), die eine thermoplastische Folie oder Papier umfasst; wobei die vierte Schicht (14) die zweite Außenoberfläche (10b) des Laminats (10) bildet;
eine fünfte Schicht (15) und eine sechste Schicht (16); wobei sowohl die fünfte (15) als auch die sechste (16) Schicht mindestens eines von einem Ethylen-Acrylsäure-Copolymer und einem Polyurethanklebstoff umfassen;
wobei die dritte Schicht (13) in direktem Kontakt mit sowohl der fünften (15) als auch der sechsten (16) Schicht ist; und
wobei das Laminat (10) eine Biegefestigkeit zwischen 51,4 und 177 Gurley-Einheiten (0,50 und 1,74 mNewton) in entweder der Maschinenrichtung oder der Querrichtung hat, gemessen gemäß den technischen Angaben.

2. Laminat (10) nach Anspruch 1, wobei das Papier eine Dicke zwischen 25,4 und 305 µm (1 und 12 mil) hat.

3. Laminat (10) nach Anspruch 1, wobei das Papier ein Flächengewicht zwischen 1 und 50 g/m² hat.

4. Laminat (10) nach Anspruch 1, wobei die thermoplastische Folie ein Material ausgewählt aus der Gruppe bestehend aus Polyethylenterephthalat (PET), Polypropylen (PP), Polyamid (PA), hochschlagfestem Polystyrol (HIPS), Allzweckpolystyrol (GPPS), Styrol-Blockcopolymer (SBC), Polyethylen mit hoher Dichte (HDPE), Polyethylen mit mittlerer Dichte (MDPE), Polyethylen mit niedriger Dichte (LDPE), linearem Polyethylen mit niedriger Dichte (LLDPE), Polyethylen mit sehr niedriger Dichte (VLDPE), Polyethylen mit ultraniedriger Dichte (ULDPE) und Gemischen davon umfasst.

5. Laminat (10) nach Anspruch 4, wobei die thermoplastische Folie orientiert ist.

6. Laminat (10) nach Anspruch 1, wobei das Laminat (10) eine siebte Schicht (17) umfasst, die zwischen der vierten Schicht (14) und der sechsten Schicht (16) angeordnet ist, und wobei die siebte Schicht (17) ein Polyethylen mit niedriger Dichte umfasst.

7. Laminat (10) nach Anspruch 6, wobei das Laminat (10) eine achte Schicht (18) umfasst, die zwischen der ersten Schicht (11) und der zweiten Schicht (12) angeordnet ist, und wobei die achte Schicht (18) ein Polyethylen mit niedriger Dichte oder einen Polyurethanklebstoff umfasst.

8. Laminat (10) nach Anspruch 1, wobei die erste Schicht (11) eine Gesamtdicke von mindestens 25,4 µm (1 mil) hat.

## Revendications

1. Stratifié barrière résistant chimiquement flexible (10) pour l'emballage d'un produit, le stratifié possédant une première surface extérieure et une deuxième surface extérieure, le stratifié comprenant :
une première couche (11) comprenant un matériau thermoscellable ; la première couche (11) formant la première surface extérieure (10a) du stratifié (10) ;
une deuxième couche (12) qui est 100 % en poids d'un copolymère d'oléfine cyclique ;
une troisième couche (13) comprenant une feuille métallique ou un matériau polymérique métallisé ; la deuxième couche (12) étant positionnée entre les première (11) et troisième (13) couches ;
une quatrième couche (14) comprenant un film thermoplastique ou un papier ; la quatrième couche (14) formant la deuxième surface extérieure (10b) du stratifié (10) ;
une cinquième couche (15) et une sixième couche (16) ; à la fois la cinquième (15) et la sixième (16) couche comprenant au moins l'un parmi un copolymère d'éthylène-acide acrylique et un adhésif de polyuréthane ;
la troisième couche (13) étant en contact direct avec à la fois la cinquième (15) et la sixième (16) couche ; et
le stratifié (10) possédant une résistance à la flexion comprise entre 51,4 et 177 unités Gurley (0,50 et 1,74 mNewton) soit dans le sens machine, soit dans le sens transverse, mesurée selon la description.

2. Stratifié (10) selon la revendication 1, le papier possédant une épaisseur comprise entre 25,4 et 305 µm (1 et 12 mil).

3. Stratifié (10) selon la revendication 1, le papier possédant un grammage compris entre 1 et 50 g/m².

4. Stratifié (10) selon la revendication 1, le film thermoplastique comprenant un matériau choisi dans le groupe constitué par un poly(téréphtalate d'éthylène) (PET), un polypropylène (PP), un polyamide (PA), un polystyrène à impact élevé (HIPS), un polystyrène à usage général (GPPS), un copolymère à blocs de styrène (SBC), un polyéthylène haute densité (HDPE), un polyéthylène moyenne densité (MDPE), un polyéthylène basse densité (LDPE), un polyéthylène basse densité linéaire (LLDPE), un polyéthylène très basse densité (VLDPE), un polyéthylène ultra-basse densité (ULDPE) et des mélanges correspondants.

5. Stratifié (10) selon la revendication 4, le film thermoplastique étant orienté.

6. Stratifié (10) selon la revendication 1, le stratifié (10) comprenant une septième couche (17) disposée entre la quatrième couche (14) et la sixième couche (16), et la septième couche (17) comprenant un polyéthylène basse densité.

7. Stratifié (10) selon la revendication 6, le stratifié (10) comprenant une huitième couche (18) disposée entre la première couche (11) et la deuxième couche (12), et la huitième couche (18) comprenant un polyéthylène basse densité ou un adhésif de polyuréthane.

8. Stratifié (10) selon la revendication 1, la première couche (11) possédant une épaisseur totale d'au moins 25,4 µm (1 mil).
